(19) Europäisches Patentamt
European Patent Office
Office européen des brevets

(11) **EP 4 472 059 A1**

(12) **EUROPEAN PATENT APPLICATION**

(43) Date of publication:
**04.12.2024 Bulletin 2024/49**

(21) Application number: **23176831.8**

(22) Date of filing: **01.06.2023**

(51) International Patent Classification (IPC):
*H02P 6/10* (2006.01)     *H02P 23/04* (2006.01)
*H02P 23/14* (2006.01)

(52) Cooperative Patent Classification (CPC):
**H02P 23/04; H02P 6/10; H02P 23/14**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **ABB SCHWEIZ AG
5400 Baden (CH)**

(72) Inventors:
• **HARNEFORS, Lennart
Västerås (SE)**
• **IKRAM UL HAQ, Omer
Surahammar (SE)**
• **BOSGA, Sjoerd
Västerås (SE)**

(74) Representative: **Kransell & Wennborg KB
P.O. Box 27834
115 93 Stockholm (SE)**

(54) **METHOD OF REDUCING VIBRATIONS IN AN ELECTRIC MOTOR**

(57)     A method of reducing vibrations in an electric motor comprising a rotor and a stator, by means of an active vibration controller, AVC, the method comprising: a) determining whether one of an angular rotational speed of the rotor and an angular stator frequency multiplied by two is within a critical range comprising a mechanical resonance frequency of a motor assembly comprising the electric motor and its load, b) i) setting an oscillating incremental torque angular frequency of the AVC to the angular rotational speed of the rotor if the angular rotational speed of the rotor is within the critical range, or ii) setting the oscillating incremental torque angular frequency to the angular stator frequency multiplied by two if the angular stator frequency multiplied by two is within the critical range, iii) generating an oscillating incremental torque reference using the AVC with the oscillating incremental torque angular frequency set in step b i) or b ii), and iv) controlling the electric motor based on a sum of the oscillating incremental torque reference and an electrical torque reference; or c) i) deactivating the AVC if the angular rotational speed of the rotor and the angular stator frequency multiplied by two is outside the critical range, and ii) controlling the electric motor based on the electrical torque reference.

Fig. 3

**Description**

**TECHNICAL FIELD**

The present disclosure generally relates to electric motors.

**BACKGROUND**

Severe vibrations of the foundation of an electric motor occur when an electrical motor operates at natural frequencies of the mechanical body, i.e., of the entire motor assembly, including the stator, the rotor, motor end plates, and connected load if any, etc. Traditionally, this problem has been resolved by making design modifications to the mechanical assembly to alter the natural frequency modes. This involves design modifications to the machine itself, such as modifications of the mounting assembly allowing the machine to be operated at speeds below the natural frequencies, i.e. the critical speed is never reached.

Continuous operation at or close to the critical speed is not feasible. If operation above the critical speed is required, during acceleration and deceleration of motor, there are instances when the critical speed is passed, temporarily resulting in large vibrations. These can be harmful; hence passage of the critical speed must be made as quickly as possible, which limits the operational range of the machine.

**SUMMARY**

Thus, in view of the above an object of the present disclosure is to provide a method which solves or at least mitigates the problems of the prior art.

There is hence according to a first aspect of the present disclosure provided a method of reducing vibrations in an electric motor comprising a rotor and a stator, by means of an active vibration controller, AVC, the method comprising: a) determining whether one of an angular rotational speed of the rotor and an angular stator frequency multiplied by two is within a critical range comprising a mechanical resonance frequency of a motor assembly comprising the electric motor and its load, b) i) setting an oscillating incremental torque angular frequency of the AVC to the angular rotational speed of the rotor if the angular rotational speed of the rotor is within the critical range, or ii) setting the oscillating incremental torque angular frequency to the angular stator frequency multiplied by two if the angular stator frequency multiplied by two is within the critical range, iii) generating an oscillating incremental torque reference using the AVC with the oscillating incremental torque angular frequency set in step b i) or b ii), and iv) controlling the electric motor based on a sum of the oscillating incremental torque reference and an electrical torque reference; or c) i) deactivating the AVC if the angular rotational speed of the rotor and the angular stator frequency multiplied by two is outside the critical range, and ii) controlling the electric motor based on the electrical torque reference.

The electrical torque reference is the driving torque reference for controlling the electric motor and is determined by the requirements for load control. The oscillating incremental torque reference adds a torque component which has the purpose to cancel the unbalance torque of the electric motor, and which results from unwanted vibrations of the motor assembly.

The method may be performed over and over during operation of the electric motor.

According to one embodiment in step c ii) the electric torque reference is the only torque reference used for controlling the electric motor.

According to one embodiment the critical range has a lower endpoint of $\omega_0$ - A and an upper endpoint of $\omega_0$ + B, where $\omega_0$ is the mechanical resonance frequency and both A and B are smaller than a value of the mechanical resonance frequency.

According to one embodiment in step c i) the AVC is deactivated by setting the AVC a damping of the AVC to greater than zero.

According to one embodiment step c i) comprises setting the oscillating incremental torque angular frequency of the AVC to a resonance frequency of the motor assembly.

According to one embodiment in step b iii) the AVC uses feedback of a measured vibration-related signal of the electric motor to obtain the oscillating incremental torque reference.

The feedback may be negative feedback.

The AVC may for example be a resonant controller.

According to one embodiment the vibration-related signal is horizontal vibration velocity.

According to one embodiment the AVC has infinite gain at the oscillating incremental torque angular frequency.

There is according to a second aspect of the present disclosure provided a control system for reducing vibrations in an electric motor comprising a rotor and a stator, the control system comprising: processing circuitry, and a storage medium comprising computer code, which when executed by the processing circuitry is configured to cause the control system to perform the method of the first aspect.

There is according to a third aspect of the present disclosure provided a motor system comprising: an electric motor, a control system of the second aspect configured to control the electric motor.

Generally, all terms used in the claims are to be interpreted according to their ordinary meaning in the technical field, unless explicitly defined otherwise herein. All references to "a/an/the element, apparatus, component, means", etc. are to be interpreted openly as referring to at least one instance of the element, apparatus, component, means, etc., unless explicitly stated otherwise.

**BRIEF DESCRIPTION OF THE DRAWINGS**

Exemplifying embodiments will now be described, with reference to the accompanying drawings, in which:

Fig. 1 schematically shows a motor assembly;

Fig. 2 schematically shows an example of a control system of the motor assembly in Fig. 1;

Fig. 3 is a flowchart of a method of reducing vibrations in the motor assembly; and

Fig. 4 shows some functional blocks of the control system.

**DETAILED DESCRIPTION**

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

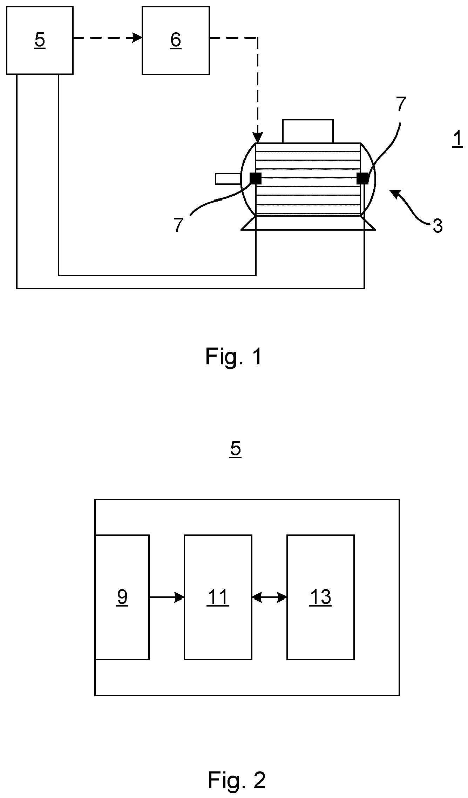

Fig. 1 shows an example of a motor system 1. The motor system 1 comprises a motor assembly including an electric motor 3, the foundation on which the electric motor 3 stands, and the outer cover of the electric motor 3.

The electric motor 3 comprises a stator, and a rotor arranged inside the stator and arranged to rotate relative to the stator.

The motor system 1 also comprises a control system 5, a power converter 6, such as a frequency converter, configured to drive the electric motor 3, and configured to be controlled by the control system 5, and a plurality of sensors 7.

The motor assembly may also include a load which the electric motor 3 is configured to drive.

The sensors 7 are configured to make measurements of a vibration-related parameter such as acceleration, vibrational velocity, displacement, or sound, of the motor system 1. The sensors 7 may thus for example be accelerometers, displacement sensors, or microphones. The sensors 7 may for example be arranged to measure horizontal vibration, such as horizontal acceleration, i.e., acceleration in the horizontal plane.

Fig. 2 schematically depicts a block diagram of an example of the control system 5. The control system 5 is configured to reduce mechanical vibrations of the motor assembly while the electric motor 3 is in operation.

The control system 5 comprises an input unit 9 configured to receive a vibration-related signal based on measurements from the sensors 7.

The control system 5 comprises an AVC. The AVC is configured to determine an oscillating incremental torque reference as a feedback of the vibration-related signal, as will be explained in more detail in the following.

The AVC may be a resonant controller, for example as follows:

$$AVC(s) = K \frac{s \cdot \cos(\omega_r T) - \omega_r \sin(\omega_r T)}{s^2 + 2\zeta_r \omega_r s + \omega_r^2}, (1)$$

where K is the gain, $\zeta_r$ is the damping, $\omega_r$ is the oscillating incremental torque angular frequency, and T is the time delay of the response of the oscillating incremental torque to its oscillating incremental torque reference.

According to one example, the control system 5 may comprise a signal conditioner which converters the measurements by the sensors 7 to the vibration-related signal. For example, the sensors 7 may be accelerometers, and the signal conditioner may be configured to convert the acceleration to vibrational velocity, which according to an example may be the vibration-related signal.

The control system 5 comprises processing circuitry 11. The processing circuitry 11 may for example use any combination of one or more of a suitable central processing unit (CPU), multiprocessor, microcontroller, digital signal processor (DSP), application specific integrated circuit (ASIC), field programmable gate arrays (FPGA) etc., capable of executing any herein disclosed operations concerning reducing vibrations of the motor system 1.

The control system 5 may comprise a storage medium 13. The storage medium 13 may comprise a computer program including computer code which when executed by the processing circuitry 13 causes the control system 5 to perform a method as disclosed herein.

The storage medium 13 may for example be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory.

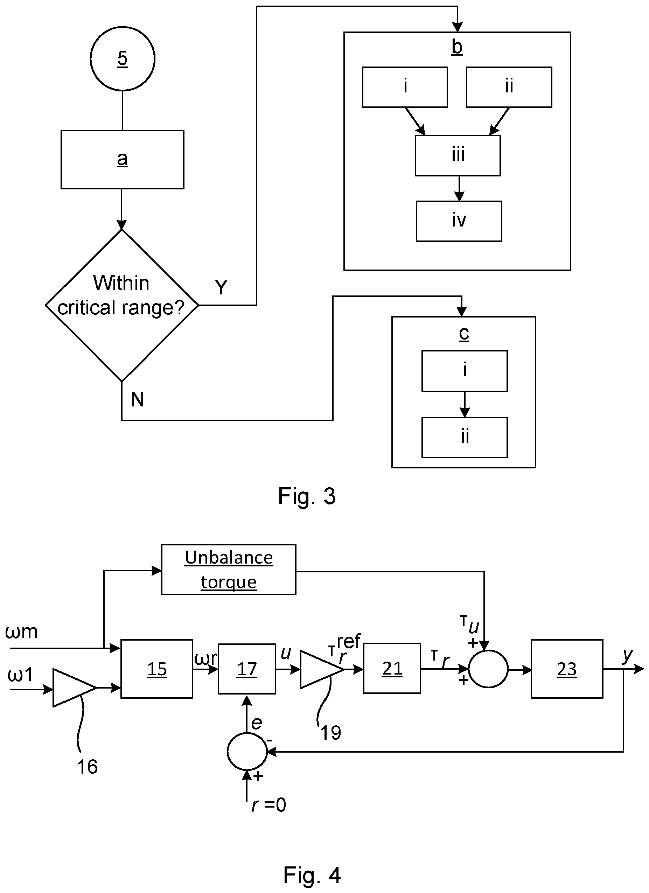

With reference to Figs 3 and 4, a method of reducing vibrations in the electric motor 3 by means of the AVC will now be described.

An analysis of the dynamics of horizontal vibration shows that rotor unbalance results in an unbalance torque $\tau_u$, which excites the horizontal vibrations. The unbalance torque $\tau_u$ is applied to the electric motor 3 in exactly the same way as the electrical torque, which can be controlled by the power converter 6. This makes it feasible to add, via the AVC, an oscillating increment $\tau_r$ to the electrical torque, such that $\tau_r = -\tau_u$ in the steady state, ideally cancelling the excitation of horizontal vibrations.

The angular frequency of the unbalance torque $\tau_u$ is fundamentally the same angular frequency as the angular rotational speed $\omega_m$ of the rotor. This is known as 1X excitation. In addition, for two-pole motors, there is an excitation at the angular stator frequency $\omega_1$ multiplied by two, called 2F excitation.

In a step a) it is determined whether one of the angular rotational speed $\omega_m$ of the rotor and the angular stator frequency $\omega_1$ multiplied by two is within a critical range comprising a mechanical resonance frequency $\omega_0$ of the motor assembly. In case the electric motor 3 is connected to a load, which may also be part of the motor assembly, the load influences the mechanical resonance frequency.

The critical range may be expressed as

$$CR = [\omega_0 - A, \omega_0 + B], (2)$$

A and B are numbers each of which may be smaller than the mechanical resonance frequency $\omega_0$. A and B may for example be at least one order of magnitude smaller than the mechanical resonance frequency $\omega_0$. A and B may be equal, in which case the critical range is centred around the mechanical resonance frequency $\omega_0$.

The angular rotational speed $\omega_m$ may for example be determined by measurement or estimation. The angular stator frequency $\omega_1$ is known from the operation of the control system 5.

In case it is determined in step a) that the angular rotational speed $\omega_m$ of the rotor is within the critical range, in a step b i) the oscillating incremental torque angular frequency $\omega_r$ of the AVC is set to the angular rotational speed $\omega_m$ of the rotor.

In case it is determined in step a) that the angular stator frequency $\omega_1$ multiplied by two is within the critical range, in a step b ii) the oscillating incremental torque angular frequency $\omega_r$ of the AVC is set to the angular stator frequency $\omega_1$ multiplied by two.

As shown in Fig. 4, the control system 5 may comprise an AVC input module 15. The AVC input module 15 performs step a) and sets the oscillating incremental torque angular frequency $\omega_r$ for the AVC 17. Thus, as an example, the AVC input module 15 sets the value of the oscillating incremental torque angular frequency $\omega_r$ of the AVC 17 according to equation (1) above.

The control system 5 may comprise a multiplication module 16 which multiplies the angular stator frequency $\omega_1$ by two before it is processed by the AVC input module 15.

A control error e of the vibrations is determined as the difference between the vibration-related signal y and a reference r which is zero. Thus, the control error e is zero when no vibrations are measured by the sensors 7. The control error e is input to the AVC 17.

In a step b iii) an oscillating incremental torque reference $\tau_r$ is generated using the AVC 17 with the oscillating incremental torque angular frequency $\omega_r$ set in step b i) or b ii).

In steps b i) to b iii) the damping $\zeta_r$ of the AVC 17 may be zero to obtain the poles on the imaginary axis at $s = \pm j\omega_r$. This gives the effect that a sinusoidal unbalance torque of angular frequency $\omega_r$ is completely suppressed in the steady state. In other words, the AVC 17 has infinite gain at the oscillating incremental torque angular frequency $\omega_r$

The AVC output u of the AVC 17 is sent to a scaling module 19, which scales the AVC output u by $1/\widehat{G}_0$, where $\widehat{G}_0$ is an estimate of the resonant gain of the transfer function of a dynamic mechanical motor model describing the motor assembly. The scaling module 19 outputs $\tau_r^{ref} = u/\widehat{G_0}$ , which may be sent to a delay module 21 to attain $e^{-sT} \cdot u/\widehat{G_0}$ , which is the oscillating incremental torque reference $\tau_r$.

Essentially, the oscillating incremental torque reference $\tau_r$ is AVC(s)*y or AVC(s)*(-y), with the additional scaling and time delay. The oscillating incremental torque reference $\tau_r$ is thus set as feedback of the vibration-related signal y to the AVC 17.

In a step b iv) the electric motor 3 is controlled based on a sum of the oscillating incremental torque reference $\tau_r$ and an electrical torque reference. Ideally, the oscillating incremental torque reference $\tau_r$ is equal, but with opposite sign, to the unbalance torque $\tau_u$, i.e., $\tau_r = -\tau_u$. Thus, the oscillating incremental torque reference $\tau_r$ is used by the power converter 6 and injected into the electric motor 3, in Fig. 4 illustrated by the module 23, which is the transfer function of the dynamic mechanical motor model.

In case neither the angular rotational speed $\omega_m$ nor the angular stator frequency $\omega_1$ multiplied by two is within the critical range, in a step c i) the AVC 17 is deactivated. In this case, in a step c ii) the electric motor 3 is controlled based on the electrical torque reference. Thus, in step c ii) the electric torque reference is the only torque reference used for controlling the electric motor.

The AVC 17 is deactivated by setting the damping $\zeta_r$ of the AVC 17 positive, i.e., $\zeta_r$ >0.

Further, in step c i) the oscillating incremental torque angular frequency $\omega_r$ of the AVC 17 may be set to the mechanical resonance frequency $\omega_0$.

By performing the method over and over during the operation of the electric motor 3, the mechanical vibrations are well supressed for both 1X and 2F excitation.

The inventive concept has mainly been described above with reference to a few examples. However, as is readily appreciated by a person skilled in the art, other embodiments than the ones disclosed above are equally possible within the scope of the inventive concept, as defined by the appended claims.

**Claims**

1.    Method of reducing vibrations in an electric motor (3) comprising a rotor and a stator, by means of an active vibration controller, AVC, (17) the method comprising:

a) determining whether one of an angular rotational speed ($\omega_m$) of the rotor and an angular stator frequency ($\omega_1$) multiplied by two is within a critical range comprising a mechanical resonance frequency of a motor assembly comprising the electric motor (3) and its load,

b)

i) setting an oscillating incremental torque angular frequency ($\omega_r$) of the AVC (17) to the angular rotational speed ($\omega_m$) of the rotor if the angular rotational speed ($\omega_m$) of the rotor is within the critical range, or
ii) setting the oscillating incremental torque angular frequency ($\omega_r$) to the angular stator frequency ($\omega_1$) multiplied by two if the angular stator frequency ($\omega_1$) multiplied by two is within the critical range,
iii) generating an oscillating incremental torque reference ($\tau_r$) using the AVC (17) with the oscillating incremental torque angular frequency ($\omega_r$) set in step b i) or b ii), and
iv) controlling the electric motor (3) based on a sum of the oscillating incremental torque reference ($\tau_r$) and an electrical torque reference; or

c)

i) deactivating the AVC (17) if the angular rotational speed ($\omega_m$) of the rotor and the angular stator frequency ($\omega_1$) multiplied by two is outside the critical range, and
ii) controlling the electric motor (3) based on the electrical torque reference.

2.    Method as claimed in claim 1, wherein in step c ii) the electric torque reference is the only torque reference used for controlling the electric motor (3).

3.    Method as claimed in claim 1 or 2, wherein the critical range has a lower endpoint of $\omega_0$ - A and an upper endpoint of $\omega_0$ + B, where $\omega_0$ is the mechanical resonance frequency and both A and B are smaller than a value of the mechanical resonance frequency.

4. Method as claimed in any of the preceding claims, wherein in step c i) the AVC (17) is deactivated by setting a damping of the AVC (17) to greater than zero.

5. Method as claimed in any of the preceding claims, wherein step c i) comprises setting the oscillating incremental torque angular frequency ($\omega_r$) of the AVC (17) to a resonance frequency of the motor assembly.

6. Method as claimed in any of the preceding claims, wherein in step b iii) the AVC (17) uses feedback of a measured vibration-related signal (y) of the electric motor (3) to obtain the oscillating incremental torque reference ($\tau_r$).

7. Method as claimed in claim 6, wherein the vibration-related signal (y) is horizontal vibration velocity.

8. Method as claimed in any of the preceding claims, wherein the AVC (17) has infinite gain at the oscillating incremental torque angular frequency ($\omega_r$).

9. A control system (5) for reducing vibrations in an electric motor (3) comprising a rotor and a stator, the control system (5) comprising:

   processing circuitry (11), and
   a storage medium (13) comprising computer code, which when executed by the processing circuitry (11) is configured to cause the control system (5) to perform the method as claimed in any of the preceding claims.

10. Motor system (1) comprising:

    an electric motor (3),
    a control system (5) as claimed in claim 9 configured to control the electric motor (3).

Fig. 1

5

Fig. 2

Fig. 3

Fig. 4

Europäisches
Patentamt
European
Patent Office
Office européen
des brevets

# EUROPEAN SEARCH REPORT

Application Number

EP 23 17 6831

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/126852 A1 (MORIYA FUMIYUKI [JP] ET AL) 10 May 2018 (2018-05-10) | 1-6,9,10 | INV.<br>H02P6/10 |
| Y | * paragraph [0007] - paragraph [0008] *<br>* paragraph [0015] - paragraph [0046]; figures 1-3 * | 7,8 | H02P23/04<br>H02P23/14 |
| | ----- | | |
| Y | US 2023/025973 A1 (RODRIGUEZ PEDRO [SE] ET AL) 26 January 2023 (2023-01-26)<br>* paragraph [0052] * | 7 | |
| | ----- | | |
| Y | US 2019/296666 A1 (PRAMOD PRERIT [US] ET AL) 26 September 2019 (2019-09-26)<br>* paragraph [0006] *<br>* paragraph [0022] - paragraph [0070]; figures 1-6 * | 8 | |
| | ----- | | |
| A | US 2021/218356 A1 (KAMBRATH JISHNU K [GB] ET AL) 15 July 2021 (2021-07-15)<br>* paragraph [0059] - paragraph [0072]; claims 13-14; figure 5 * | 1-10 | |
| | ----- | | TECHNICAL FIELDS SEARCHED (IPC) |
| | | | H02P |

The present search report has been drawn up for all claims

| Place of search | Date of completion of the search | Examiner |
|---|---|---|
| Munich | 10 November 2023 | Landi, Matteo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 17 6831**

This annex lists the patent family members relating to the patent documents cited in the above-mentioned European search report.
The members are as contained in the European Patent Office EDP file on
The European Patent Office is in no way liable for these particulars which are merely given for the purpose of information.

**10-11-2023**

| Patent document cited in search report | | Publication date | Patent family member(s) | | Publication date |
|---|---|---|---|---|---|
| US 2018126852 | A1 | 10-05-2018 | CN | 108058616 A | 22-05-2018 |
| | | | JP | 6492045 B2 | 27-03-2019 |
| | | | JP | 2018078665 A | 17-05-2018 |
| | | | US | 2018126852 A1 | 10-05-2018 |
| US 2023025973 | A1 | 26-01-2023 | EP | 4120044 A1 | 18-01-2023 |
| | | | US | 2023025973 A1 | 26-01-2023 |
| US 2019296666 | A1 | 26-09-2019 | CN | 110365268 A | 22-10-2019 |
| | | | DE | 102019107686 A1 | 26-09-2019 |
| | | | US | 2019296666 A1 | 26-09-2019 |
| US 2021218356 | A1 | 15-07-2021 | CN | 113114083 A | 13-07-2021 |
| | | | EP | 3849074 A1 | 14-07-2021 |
| | | | GB | 2590953 A | 14-07-2021 |
| | | | US | 2021218356 A1 | 15-07-2021 |

EPO FORM P0459

For more details about this annex : see Official Journal of the European Patent Office, No. 12/82